# EUROPÄISCHE PATENTSCHRIFT

(11) **EP 3 993 667 B1**
(45) Veröffentlichungstag und Bekanntmachung des Hinweises auf die Patenterteilung: **17.04.2024**
(21) Anmeldenummer: 20785492.8
(22) Anmeldetag: 30.09.2020
(51) Int. Cl.: A47B 96/20, F21V 33/00

(54) **VORRICHTUNG ZUR ELEKTRIFIZIERUNG VON MÖBELN**
DEVICE FOR ELECTRIFYING FURNITURE
DISPOSITIF D'ÉLECTRIFICATION DE MEUBLES

(30) Priorität: 06.11.2019 DE 202019106156 U
(43) Veröffentlichungstag der Anmeldung: 11.05.2022
(73) Patentinhaber: Häfele Berlin GmbH & Co KG, 12307 Berlin (DE)
(72) Erfinder: VON WILCKE, Michael, 16547 Birkenwerder (DE); BIRKNER, Robert, 13595 Berlin (DE)
(74) Vertreter: Kohler Schmid Möbus Patentanwälte
(86) Internationale Anmeldenummer: PCT/EP2020/077341
(87) Internationale Veröffentlichungsnummer: WO 2021/089247

(56) Entgegenhaltungen:
- DE-U1-202008 003 360
- DE-U1-202010 013 220
- DE-U1-202014 002 269
- US-A1- 2010 008 072

## Beschreibung

Die Erfindung betrifft eine Vorrichtung zur Elektrifizierung von Möbeln mit mindestens einer ersten Möbelplatte, die in einer ihrer beiden Plattenseiten zwei parallele Nuten und zwei jeweils in den beiden Nuten verlegte, freiliegende Stromschienen aufweist, und mit mindestens einem elektrischen Stecker zum Verbinden mit den beiden Stromschienen, der zwei elektrische Kontakte aufweist, welche auf einer Verbindungsseite des Steckergehäuses als freiliegende Abnehmerkontakte und auf einer Frontseite des Steckergehäuses als Anschlusskontakte ausgebildet sind, wobei die Abnehmerkontakte jeweils an den beiden Stromschienen elektrisch leitend anliegen.

Eine derartige Vorrichtung zur Elektrifizierung von Möbeln ist beispielsweise durch US 2010/008072 A1 bekannt geworden.

Zur Elektrifizierung von Möbeln werden üblicherweise Kabel verwendet, die vor Ort aufwändig durch Löcher in Möbelplatten eingefädelt werden müssen.

Bei der aus US 2010/008072 A1 bekannten Vorrichtung ist der Stecker in eine Bohrung in der einen Plattenseite der ersten Möbelplatte eingesetzt, die mittig zwischen den beiden Nuten angeordnet ist, ohne dabei die Nuten zu unterbrechen. Die Abnehmerkontakte des Steckers tangieren jeweils die in den Nuten verlegten Stromschienen.

Der vorliegenden Erfindung liegt demgegenüber die Aufgabe zugrunde, eine alternative Elektrifizierung von Möbeln anzugeben.

Diese Aufgabe wird erfindungsgemäß gelöst durch eine Vorrichtung zur Elektrifizierung von Möbeln mit den Merkmalen von Anspruch 1.

Vorteilhafte Weiterbildungen der Erfindung sind in den Unteransprüchen angegeben.

Die erfindungsgemäße Vorrichtung zur Elektrifizierung von Möbeln hat insbesondere folgende Vorteile:
- Unsichtbare elektrische Verteilung im Möbel mit variabler Kontaktierung für unterschiedliche Stromabnahmestecker;
- Die Stromabnahmestecker können nach Kundenanforderung variabel entlang der Stromschienen positioniert werden.
- Die Stromschienen sind so ausgelegt, dass sie zum einen federnd gelagert sind und zum anderen, durch entsprechende konstruktive Auslegung, sich beim Einbringen in die Nuten der Möbelplatte darin verkrallen.
- In der auf die Stromschienen einer ersten Möbelplatte stirnseitig aufgesetzten zweiten Möbelplatte kommen über eine seitlich offene Kanten-Bohrung die Abnehmerkontakte des Steckers der zweiten Möbelplatte in elektrischen Kontakt mit den Stromschienen.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Vorrichtung zur Elektrifizierung einer Möbelplatte;
- Fign. 2a, 2b: Detailansichten der Möbelplatte gemäß IIa und IIb in Fig. 1;
- Fign. 3a, 3b: einen in Fig. 1 gezeigten Stecker in einer perspektivischen Ansicht auf seine Verbindungsseite (Fig. 3a) und auf seine Frontseite (Fig. 3b);
- Fign. 4a, 4b: die Montage des Steckers in der Möbelplatte;
- Fig. 5: die elektrische Kontaktierung zwischen dem Stecker und Stromschienen der Möbelplatte;
- Fig. 6: eine zweite nicht erfindungsgemäße Vorrichtung zur Elektrifizierung zweier Möbelplatten
- Fign. 7a, 7b: einen in Fig. 6 gezeigten Stecker in einer perspektivischen Ansicht auf seine Verbindungsseite (Fig. 7a) und auf seine Frontseite (Fig. 7b);
- Fign. 8a, 8b: die Montage des Steckers in der zweiten Möbelplatte; und
- Fig. 9: die elektrische Kontaktierung zwischen dem Stecker und Stromschienen der ersten Möbelplatte.

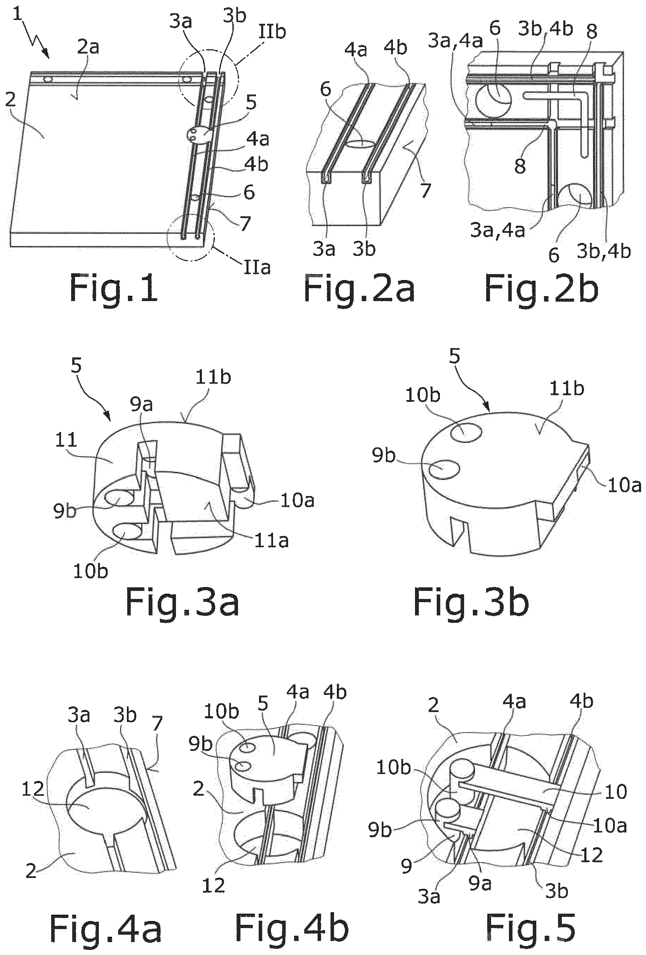

Die in **Fig. 1** gezeigte Vorrichtung **1** dient zur Elektrifizierung von Möbeln und umfasst eine Möbelplatte **2,** die in der hier oberen Plattenseite **2a** zwei parallele Nuten **3a, 3b** und zwei darin verlegte, freiliegende Stromschienen **4a, 4b** aufweist, sowie einen Stecker **5** zum elektrischen Verbinden mit den beiden Stromschienen 4a, 4b. Befestigungsbohrungen **6** zum Befestigen der Möbelplatte 1 sind mittig zwischen den beiden Nuten 3a, 3b angeordnet.

Wie in **Fig. 2a** gezeigt, verlaufen die beiden Nuten 3a, 3b parallel zu und unmittelbar an der Plattenstirnseite **7** der ersten Möbelplatte 2. Die Stromschienen 3a, 3b sind jeweils als U-förmiges Schienenprofil ausgebildet, dessen Profilöffnung zu der oberen Plattenseite 2a hin gewandt ist, und in den Nuten 3a, 3b festgeklemmt und verkrallt. Die freien Profilenden des U-förmigen Schienenprofils sind von den Nutwänden beabstandet und dadurch nach außen federnd gelagert. Die U-förmigen Schienenprofile sind somit so ausgelegt, dass sie zum einen federnd gelagert sind und zum anderen sich durch die konstruktive Auslegung beim Einbringen in die Nuten 3a, 3b darin verkrallen.

Wie in **Fig. 2b** gezeigt, kann die Möbelplatte 2 auch gegeneinander abgewinkelte Paare von parallelen Nuten 3a, 3b aufweisen, die ineinander münden. Die Stromschienen 3 von ineinander mündenden Nuten sind jeweils mittels eines elektrisch leitfähigen Verbindungselements **8** (z.B. eines Metallwinkels), das in die Profilöffnungen der Stromschienen 4a, 4b eingesetzt ist, elektrisch leitend miteinander verbunden.

Der Stecker 5 weist zwei elektrische Kontakte **9, 10 (****Fign. 3a, 3b, 5****)** auf, welche auf einer Verbindungsseite **11**a des Steckergehäuses **11** als freiliegende Abnehmerkontakte **9a, 10a** und auf einer Frontseite **11b** des Steckergehäuses 11 als Anschlusskontakte **9b, 10b** ausgebildet sind. Die Verbindungsseite 11a und die Frontseite 11b liegen einander gegenüber.

**Fign. 4a, 4b** zeigen die Montage des Steckers 5 in der Möbelplatte 2. Der Stecker 5 wird in eine die beiden Nuten 3a, 3b unterbrechende Bohrung **12** in der oberen Plattenseite 2a der ersten Möbelplatte 2 eingesetzt, bis die Abnehmerkontakte 9a, 10a an den beiden Stromschienen 4a, 4b elektrisch leitend anliegen (Fig. 5). Die Bohrung 12 ist exzentrisch zu den beiden Nuten 3a, 3b angeordnet, wobei die äußere Nut 3b mit ihrer äußeren Nutseitenwand die Bohrung 12 nur tangiert. Die Bohrung 12 kann nach Kundenanforderung variabel entlang der Nuten 3a, 3b bzw. Stromschienen 4a, 4b positioniert werden. Der Stecker 5 verschließt die Bohrung 12 vollständig und schließt mit der oberen Plattenseite 2a flächenbündig ab. Durch die Abnehmerkontakte 9a, 10a werden die federnden freien Profilenden des U-förmiges Schienenprofils elastisch aufgespreizt, was zu einem höheren Anpressdruck führt. Dazu weisen die Abnehmerkontakte 9a, 10a bevorzugt ein zwischen die freien Profilenden des U-förmiges Schienenprofils greifendes Kontaktende auf, das beispielsweise teilzylinderförmig, kugelkalottenförmig, konisch, keilförmig, oder als runder oder flacher Pin, etc. ausgeführt sein kann. Der Stecker 5 wird bis auf die Anschlusskontakte 9b, 10b durch eine aufgesetzte, zweite Möbelplatte 22 abgedeckt.

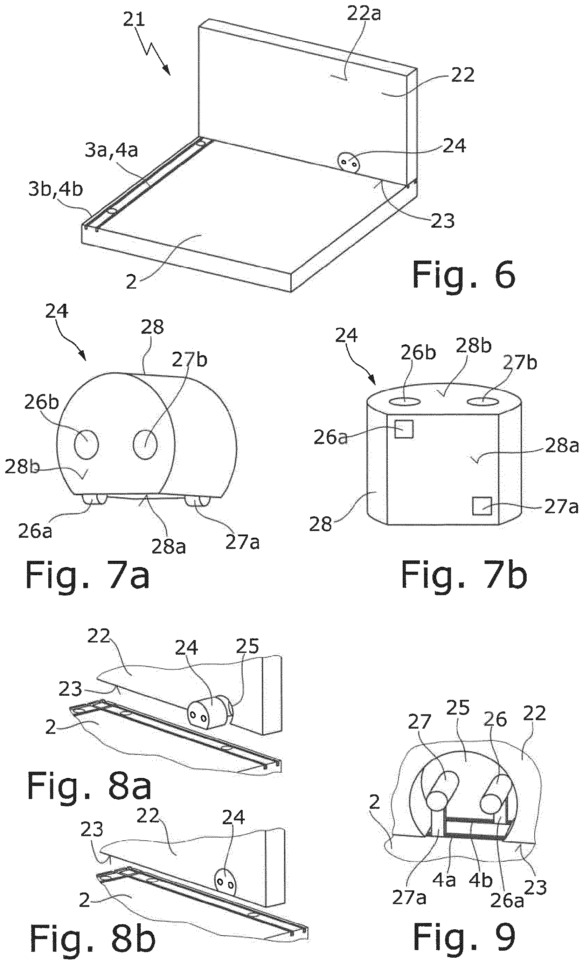

In **Fig. 6** ist eine zweite nicht erfindungsgemäße Vorrichtung **21** zur Elektrifizierung zweier Möbelplatten 2 **22** gezeigt. Die erste Möbelplatte 2 weist wie in Fig. 1 zwei parallelen Nuten 3a, 3b und zwei darin verlegte Stromschienen 4a, 4b auf. Die zweite Möbelplatte 22 liegt mit ihrer Stirnseite **23** an der oberen Plattenseite 2a der ersten Möbelplatte 1 an und ist über Verbindungsmittel (nicht gezeigt), welche in den Befestigungsbohrungen 6 der ersten Möbelplatte 2 verankert sind, an der ersten Möbelplatte 2 befestigt. Die Befestigungsbohrung 6 kann beispielsweise ein Sackloch für einen Dübel oder Verbinderbolzen sein; alternativ kann die Verbindung auch ohne Befestigungsbohrungen, z.B. mittels Winkeln oder Lamello-Verbindern, ausgeführt sein.. Die zweite Möbelplatte 22 deckt die Nuten 3a, 3b ab, so dass die Stromschienen 4a, 4b von außen nicht sichtsichtbar sind. Ein Stecker **24** zum elektrischen Verbinden mit den beiden Stromschienen 4a, 4b der ersten Möbelplatte 2 ist in eine zur Stirnseite 23 hin offene Bohrung **25** in der hier vorderen Plattenseite **22a** der zweiten Möbelplatte 20 eingesetzt.

Wie in **Fign. 7a, 7b, 9** gezeigt, weist der Stecker 24 zwei elektrische Kontakte **26, 27** auf, welche auf einer Verbindungsseite **28a** des Steckergehäuses **28** als freiliegende Abnehmerkontakte **26a, 27a** und auf einer Frontseite **28b** des Steckergehäuses 28 als teilzylinderförmige Anschlusskontakte **26b, 27b** ausgebildet sind. Die Verbindungsseite 11a und die Frontseite 11b sind rechtwinklig zueinander ausgerichtet. Der Stecker 24 verschließt die Bohrung 25 vollständig und schließt mit der vorderen Plattenseite 22a flächenbündig ab. Beim Aufsetzen der zweiten Möbelplatte 22 auf die erste Möbelplatte 2 kommen die Abnehmerkontakte 26a, 27a in elektrisch leitende Anlage mit den Stromschienen 4a, 4b der ersten Möbelplatte 2. Durch die Abnehmerkontakte 26a, 27a werden die federnden freien Profilenden des U-förmiges Schienenprofils elastisch aufgespreizt, was zu einem höheren Anpressdruck führt.

## Patentansprüche

1. Vorrichtung (1; 21) zur Elektrifizierung von Möbeln, mit mindestens einer ersten Möbelplatte (2), die in einer ihrer beiden Plattenseiten zwei parallele Nuten (3a, 3b) und zwei jeweils in den beiden Nuten (3a, 3b) verlegte, freiliegende Stromschienen (4a, 4b) aufweist, und mit mindestens einem elektrischen Stecker (5; 24) zum Verbinden mit den beiden Stromschienen (4a, 4b), der zwei elektrische Kontakte (9, 10; 26, 27) aufweist, welche auf einer Verbindungsseite (11a; 28a) des Steckergehäuses (11; 28) als freiliegende Abnehmerkontakte (9a, 10a; 26a, 27a) und auf einer Frontseite (11b; 28b) des Steckergehäuses (11; 28) als Anschlusskontakte (9b, 10b; 26b, 27b) ausgebildet sind,
wobei der Stecker (5; 24) in eine die beiden Nuten (3a, 3b) unterbrechende, exzentrisch zu den beiden Nuten (3a, 3b) angeordnete Bohrung (12) in der einen Plattenseite (2a) der ersten Möbelplatte (2) eingesetzt ist und wobei die Abnehmerkontakte (9a, 10a; 26a, 27a) jeweils an den beiden Stromschienen (4a, 4b) elektrisch leitend anliegen.

2. Vorrichtung nach Anspruch 1, **dadurch gekennzeichnet, dass** die beiden Nuten (3a, 3b) parallel zu und insbesondere unmittelbar an der Plattenstirnseite (7) der ersten Möbelplatte (2) verlaufen.

3. Vorrichtung nach Anspruch 1 oder 2, **dadurch gekennzeichnet, dass** die Stromschienen (4a, 4b) in der Nut (3a, 3b) festgeklemmt, insbesondere verkrallt sind.

4. Vorrichtung nach einem der vorhergehenden Ansprüche, **dadurch gekennzeichnet, dass** die Stromschienen (4a, 4b) jeweils als U-förmiges Schienenprofil ausgebildet sind, dessen Profilöffnung zu der Plattenseite (2a) hin gewandt ist.

5. Vorrichtung nach Anspruch 4, **dadurch gekennzeichnet, dass** die freien Profilenden des U-förmigen Schienenprofils (4a, 4b) von den Nutwänden der Nuten (3a, 3b) beabstandet sind.

6. Vorrichtung nach Anspruch 4 oder 5, **dadurch gekennzeichnet, dass** die Abnehmerkontakte (9a, 10a) ein zwischen die freien Profilenden des U-förmiges Schienenprofils greifendes Kontaktende aufweisen.

7. Vorrichtung nach einem der vorhergehenden Ansprüche, **dadurch gekennzeichnet, dass** die Bohrung (12) durch den Stecker (5) vollständig geschlossen ist, insbesondere flächenbündig mit der Plattenseite (2a) abschließt.

8. Vorrichtung nach einem der vorhergehenden Ansprüche, **dadurch gekennzeichnet, dass** eine der beiden Nuten (3a, 3b) mit ihrer äußeren Nutseitenwand die in der ersten Möbelplatte (2) vorhandene Bohrung (12) nur tangiert.

9. Vorrichtung nach einem der vorhergehenden Ansprüche, **dadurch gekennzeichnet, dass** die Verbindungsseite (11a) und die Frontseite (11b) des Steckers (5) für die erste Möbelplatte (2) einander gegenüberliegen.

10. Vorrichtung nach einem der vorhergehenden Ansprüche, **dadurch gekennzeichnet, dass** zwischen den beiden Nuten (3a, 3b) mindestens eine Befestigungsbohrung (6) der Möbelplatte (2) angeordnet ist.

11. Vorrichtung nach einem der vorhergehenden Ansprüche, **dadurch gekennzeichnet, dass** die Nuten (3a, 3b) der Möbelplatte (2) durch eine aufgesetzte, zweite Möbelplatte (22) abgedeckt sind.

12. Vorrichtung nach einem der vorhergehenden Ansprüche, **dadurch gekennzeichnet, dass** der in die erste Möbelplatte (2) eingesetzte Stecker (5) bis auf die Anschlusskontakte (9b, 10b) durch eine aufgesetzte, zweite Möbelplatte (22) abgedeckt ist.

13. Vorrichtung nach einem der vorhergehenden Ansprüche, **dadurch gekennzeichnet, dass** die erste Möbelplatte (2) zwei parallele erste Nuten (3a, 3b) und zwei parallele zweite Nuten (3a, 3b) aufweist, die jeweils ineinander münden und zueinander abgewinkelt sind, und dass die Stromschienen (4a, 4b) von ineinander mündenden Nuten jeweils mittels eines elektrisch leitfähigen Verbindungselements (8) elektrisch leitend miteinander verbunden sind.

## Claims

1. A device (1; 21) for the electrification of furniture, comprising at least a first furniture panel (2), which has, in one of its two panel sides, two parallel grooves (3a, 3b) and two exposed busbars (4a, 4b) laid respectively in the two grooves (3a, 3b), and comprising at least one electric plug (5; 24) for connecting to the two busbars (4a, 4b), which plug has two electrical contacts (9, 10; 26, 27), which are formed as exposed collector contacts (9a, 10a; 26a, 27a) on a connecting side (11a; 28a) of the plug housing (11; 28) and as connection contacts (9b, 10; 26b, 27b) on a front side (11b; 28b) of the plug housing (11; 28),
wherein the plug (5; 24) is inserted into a bore (12), interrupting the two grooves (3a, 3b) and being disposed eccentrically to the two grooves (3a, 3b), in the one panel side (2a) of the first furniture panel (2), and wherein the collector contacts (9a, 10a; 26a, 27a) each lie against the two busbars (4a, 4b) in an electrically conductive manner.

2. The device as claimed in claim 1, **characterized in that** the two grooves (3a, 3b) extend parallel to, and in particular directly along, the panel end face (7) of the first furniture panel (2).

3. The device as claimed in claim 1 or 2, **characterized in that** the busbars (4a, 4b) are clamped, in particular clawed, in the groove (3a, 3b).

4. The device as claimed in one of the preceding claims, **characterized in that** the busbars (4a, 4b) are each formed as a U-shaped rail profile, the profile opening of which faces towards the panel side (2a).

5. The device as claimed in claim 4, **characterized in that** the free profile ends of the U-shaped rail profile (4a, 4b) are spaced from the groove walls of the grooves (3a, 3b).

6. The device as claimed in claim 4 or 5, **characterized in that** the collector contacts (9a, 10a) have a contact end reaching between the free profile ends of the U-shaped rail profile.

7. The device as claimed in one of the preceding claims, **characterized in that** the bore (12) is closed entirely by the plug (5), in particular terminates flush with the panel side (2a).

8. The device as claimed in one of the preceding claims, **characterized in that** one of the two grooves (3a, 3b) is merely at a tangent to the bore (12) present in the first furniture panel (2) with its outer groove side wall.

9. The device as claimed in one of the preceding claims, **characterized in that** the connecting side (11a) and the front side (11b) of the plug (5) for the first furniture panel (2) lie opposite one another.

10. The device as claimed in one of the preceding claims, **characterized in that** at least one fastening bore (6) of the furniture panel (2) is arranged between the two grooves (3a, 3b).

11. The device as claimed in one of the preceding claims, **characterized in that** the grooves (3a, 3b) of the furniture panel (2) are covered by a seated, second furniture panel (22).

12. The device as claimed in one of the preceding claims, **characterized in that** the plug (5) inserted into the first furniture panel (2) is covered by a seated, second furniture panel (22), except for the connection contacts (9b, 10b).

13. The device as claimed in one of the preceding claims, **characterized in that** the first furniture panel (2) has two parallel first grooves (3a, 3b) and two parallel second grooves (3a, 3b), which lead into each other and are at an angle to one another, and **in that** the busbars (4a, 4b) of grooves leading into one another are each connected to one another in an electrically conductive manner by means of an electrically conductive connecting element (8).

## Revendications

1. Dispositif (1 ; 21) pour l'électrification de meubles, avec au moins un premier panneau de meuble (2), qui présente dans l'un de ses deux côtés de panneau deux rainures parallèles (3a, 3b) et deux barres omnibus exposées (4a, 4b) disposées respectivement dans les deux rainures (3a, 3b), et avec au moins une fiche électrique (5 ; 24) pour une connexion aux deux barres omnibus (4a, 4b), qui présente deux contacts électriques (9, 10 ; 26, 27), qui sont formés sur un côté de connexion (11a ; 28a) du boîtier de fiche (11 ; 28) sous la forme de contacts de client exposés (9a, 10a ; 26a, 27a) et sur un côté avant (11b ; 28b) du boîtier de fiche (11 ; 28) sous la forme de contacts de raccordement (9b, 10b ; 26b, 27b),
la fiche (5 ; 24) étant insérée dans un alésage (12) qui interrompt les deux rainures (3a, 3b) et qui est agencé de manière excentrique par rapport aux deux rainures (3a, 3b) dans l'un des côtés de de panneau (2a) du premier panneau de meuble (2), et les contacts de client (9a, 10a ; 26a, 27a) étant respectivement en contact électriquement conducteur avec les deux barres omnibus (4a, 4b).

2. Dispositif selon la revendication 1, **caractérisé en ce que** les deux rainures (3a, 3b) s'étendent parallèlement et en particulier directement sur le côté avant de panneau (7) du premier panneau de meuble (2).

3. Dispositif selon la revendication 1 ou 2, **caractérisé en ce que** les barres omnibus (4a, 4b) sont serrées dans la rainure (3a, 3b), en particulier insérées.

4. Dispositif selon l'une quelconque des revendications précédentes, **caractérisé en ce que** les barres omnibus (4a, 4b) sont réalisées chacune sous la forme d'un profilé de rail en forme de U dont l'ouverture de profilé est tournée vers le côté de panneau (2a).

5. Dispositif selon la revendication 4, **caractérisé en ce que** les extrémités de profilé libres du profilé de rail en forme de U (4a, 4b) sont espacées des parois de rainure des rainures (3a, 3b).

6. Dispositif selon la revendication 4 ou 5, **caractérisé en ce que** les contacts de contact (9a, 10a) présentent une extrémité de contact qui vient en prise entre les extrémités de profilé libres du profilé de rail en forme de U.

7. Dispositif selon l'une quelconque des revendications précédentes, **caractérisé en ce que** l'alésage (12) est complètement fermé par la fiche (5), en particulier se termine en affleurement avec le côté de panneau (2a).

8. Dispositif selon l'une quelconque des revendications précédentes, **caractérisé en ce que** l'une des deux rainures (3a, 3b) avec sa paroi latérale extérieure de rainure ne fait que tangenter l'alésage (12) présent dans le premier panneau de meuble (2).

9. Dispositif selon l'une quelconque des revendications précédentes, **caractérisé en ce que** le côté de connexion (11a) et le côté avant (11b) de la fiche (5) pour le premier panneau de meuble (2) sont opposés l'un à l'autre.

10. Dispositif selon l'une quelconque des revendications précédentes, **caractérisé en ce qu'**au moins un alésage de fixation (6) du panneau de meuble (2) est agencé entre les deux rainures (3a, 3b).

11. Dispositif selon l'une quelconque des revendications précédentes, **caractérisé en ce que** les rainures (3a, 3b) du panneau de meuble (2) sont recouvertes par un second panneau de meuble (22) rapporté.

12. Dispositif selon l'une quelconque des revendications précédentes, **caractérisé en ce que** la fiche (5) insérée dans le premier panneau de meuble (2) est recouverte, à l'exception des contacts de raccordement (9b, 10b), par un second panneau de meuble (22) rapporté.

13. Dispositif selon l'une quelconque des revendications précédentes, **caractérisé en ce que** le premier panneau de meuble (2) présente deux premières rainures parallèles (3a, 3b) et deux secondes rainures parallèles (3a, 3b), qui débouchent les unes dans les autres et sont coudées les unes par rapport aux autres, et **en ce que** les barres omnibus (4a, 4b) des rainures débouchant les unes dans les autres sont reliées les unes aux autres de manière électriquement conductrice au moyen d'un élément de connexion électriquement conducteur (8).
